# EUROPEAN PATENT SPECIFICATION

(11) **EP 2 345 272 B1**
(45) Date of publication and mention of the grant of the patent: **08.06.2016**
(21) Application number: 09824466.8
(22) Date of filing: 05.11.2009
(51) Int. Cl.: H04W 16/14, H04W 72/08, H04W 88/04, H04W 72/04

(54) **AUTOMATED LOCAL SPECTRUM USAGE AWARENESS**
AUTOMATISIERTE KENNTNIS DER VERWENDUNG EINES LOKALEN SPEKTRUMS
CONNAISSANCE AUTOMATISÉE D'UTILISATION DE SPECTRE LOCAL

(30) Priority: 05.11.2008 US 291071
(43) Date of publication of application: 20.07.2011
(73) Proprietor: Nokia Technologies Oy, 02610 Espoo (FI)
(72) Inventor: LUNDEN, Jari, FIN-02230 Espoo (FI); VIRTEJ, Elena, FIN-90540 Espoo (FI); SORRI, Antti, Sakari, FIN-00720 Helsinki (FI)
(74) Representative: Aarnio, Ari Antero
(86) International application number: PCT/IB2009/007340
(87) International publication number: WO 2010/052552

(56) References cited:
- WO-A1-2006/132487
- WO-A2-02/41586
- WO-A2-2007/031960
- GB-A- 2 445 988
- US-A1- 2003 012 167
- US-A1- 2003 068 975
- US-A1- 2003 186 713
- US-A1- 2007 253 355
- US-A1- 2008 102 849
- US-A1- 2008 132 233
- LILI CAO ET AL: 'Distributed Rule-Regulated Spectrum Sharing' IEEE JOURNAL ON SELECTED AREAS IN COMMUNICATIONS vol. 26, no. 1, January 2008, pages 130 - 145, XP011199423

## Description

### TECHNICAL FIELD:

The exemplary and non-limiting embodiments of this invention relate generally to wireless communication systems, methods, devices and computer programs and, more specifically, relate to wireless communication systems that use uncoordinated spectrum deployments possibly in combination with flexible spectrum usage.

### BACKGROUND:

This section is intended to provide a background or context to the invention that is recited in the claims. The description herein may include concepts that could be pursued, but are not necessarily ones that have been previously conceived, implemented or described. Therefore, unless otherwise indicated herein, what is described in this section is not prior art to the description and claims in this application and is not admitted to be prior art by inclusion in this section.

The following abbreviations that may be found in the specification and/or the drawing figures are defined as follows:
- 3GPP: third generation partnership project
- ADSL: asymmetric digital subscriber line
- AP: access point (base station)
- BS: base station
- BW: bandwidth
- DL: downlink (AP towards UT)
- eNB: EUTRAN Node B (evolved Node B)
- EPC: evolved packet core
- EUTRAN: evolved UTRAN (LTE)
- FSU: flexible spectrum use
- LTE: long term evolution
- MAC: medium access control
- MM/MME: mobility management/mobility management entity
- MS: mobile station
- OFDMA: orthogonal frequency division multiple access
- PDCP: packet data convergence protocol
- PDU: protocol data unit
- PHY: physical
- RLC: radio link control
- RRC: radio resource control
- SGW: serving gateway
- TDD: time division duplex
- UE: user equipment
- UT: user terminal
- UL: uplink (UT towards AP)
- UTRAN: universal terrestrial radio access network

The specification of a communication system known as evolved UTRAN (EUTRAN, also referred to as UTRAN LTE or as EUTRA) is currently nearing completion within the 3GPP. As specified the DL access technique is OFDMA, and the UL access technique is SC-FDMA (single carrier, frequency division multiple access).

One specification of interest in this regard is 3GPP TS 36.300, V8.5.0 (2008-05), 3rd Generation Partnership Project; Technical Specification Group Radio Access Network; Evolved Universal Terrestrial Radio Access (E-UTRA) and Evolved Universal Terrestrial Access Network (E-UTRAN); Overall description; Stage 2 (Release 8). This system may be referred to for convenience as LTE Rel-8, or simply as Rel-8. Note that this is a stage 2 specification, and may not exactly describe the system as it is currently expected to be implemented. In general, the set of specifications given generally as 3GPP TS 36.xyz (e.g., 36.211, 36.311, 36.312, etc.) may be seen as describing the entire Release 8 LTE system.

Of particular interest herein are the further releases of 3GPP LTE targeted towards future IMT-A systems, referred to herein for convenience simply as LTE-Advanced (LTE-A). Of additional interest herein are local area (LA) deployment scenarios using a scalable bandwidth (of up to, for example, 100MHz) with flexible spectrum use (FSU). This system concept may be referred to herein for convenience as LTE-A.

Reference can also be made to 3GPP TR 36.913, V8.0.0 (2008-06), 3rd Generation Partnership Project; Technical Specification Group Radio Access Network; Requirements for Further Advancements for E-UTRA (LTE-Advanced) (Release 8).

As cell sizes become smaller and data rates increase, the limited availability of spectrum drives wireless systems to use higher center frequencies. The use of smaller cells makes it more difficult to provide outdoor to indoor coverage transitions, and it also tends to increase the number of access points. It can be expected that a need will arise to handle deployments of a much larger number of access points, in particular in locations with restricted access (such as homes and offices).

This development has lead to a need to standardize small access points for cellular systems, sometimes referred to as "pico" or "femto" access points (e.g., having uncoordinated coverage distances measured in, for example, meters or tens of meters), in order to support high data rates in small areas. Such system architectures can be contrasted to current (coordinated deployment) cellular systems, and are typically based on privately owned and installed uncoordinated deployments. Such uncoordinated deployments are likely to consist of separate, overlapping networks, creating a demand for an approach that enables more than one network to co-exist in the same frequency band.

The use of FSU for future wireless systems is intended to provide spectrum sharing between the parties that participate actively in the communication process. A goal is to utilize the spectrum in an as optimal manner as possible in order to achieve a high use flexibility of the radio resources.

In uncoordinated deployments there is no overall control over the placement of access points, nor is there any expectation of frequency planning or any other traditional network planning methods. As a result, the transmissions of neighboring access points may cause severe interference, even though there would be unused radio resources available. One result is a degradation of overall system capacity.

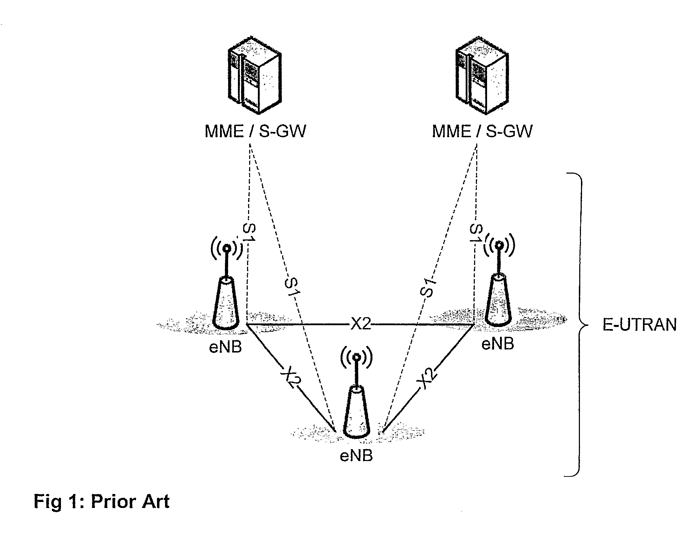

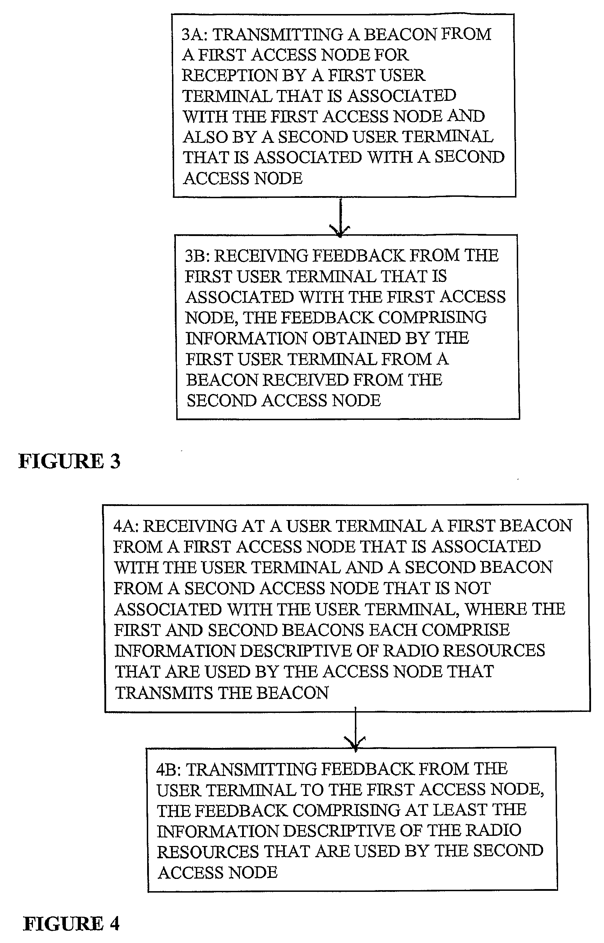

LTE radio resource management is arranged within a single network and utilizes the X2 interface between base stations (eNBs). Reference in this regard may be made to Figure 1, which reproduces Figure 4.1 of 3GPP TS 36.300, and shows the overall architecture of the EUTRAN (LTE) system. The EUTRAN system includes eNBs that provide the EUTRA user plane (PDCP/RLC/MAC/PHY) and control plane (RRC) protocol terminations towards the UE. The eNBs are interconnected with each other by means of the above-mentioned X2 interface. The eNBs are also connected by means of an S1 interface to an EPC, more specifically to a MME (Mobility Management Entity) by means of a S1 MME interface and to a Serving Gateway (SGW) by means of a S1 interface. The S1 interface supports a many to many relationship between MMEs / Serving Gateways and eNBs.

However, the inter-access point interface does not exist when cells belong to different networks, or are based on an ADSL backbone (femto BS).

FSU utilizing over the air communication between BSs has been previously considered. For example, reference can be made to IST-4-027756 WINNER II, D6.13.14, version 1.1, WINNER II System Concept Description, G. Auer et al. 01/18/2008. However, this approach presents at least one problem in that a communication channel between BSs does not necessarily exist, even though a neighboring BS may be interfering with terminals of the BS.

Document US 2007/253355 A1 discloses methods and apparatus where loading information regarding loading conditions at a neighboring base station is received at a first base station and then communicated by the first base station to mobiles within the cell in which the first base station is located.

### SUMMARY

The foregoing and other problems are overcome, and other advantages are realized, by the use of the exemplary embodiments of this invention.

A first aspect of the exemplary embodiments of this invention provides a method that comprises transmitting a first beacon from a first access node for reception by a first user terminal that is associated with the first access node and also by a second user terminal that is associated with a second access node; where the first beacon comprises information descriptive of any neighbor access nodes detected by the first access node; and
receiving feedback at the first access node from the first user terminal that is associated with the first access node, the feedback comprising information obtained by the first user terminal from a second beacon received from the second access node, where the second beacon comprises information descriptive of any neighbor access nodes detected by the second access node, the method further comprising
the first access node determining if radio resources currently available to the first access node are sufficient for handling a current communication load and, if the first access node determines that is has insufficient radio resources, reserving additional available radio resources,
where the first access node becomes aware of the additional available resources from the received feedback, and reserves at least some of the additional available radio resources by including them in the first beacon as part of an identification of radio resources that are in use by the first access node.

Another aspect of the exemplary embodiments of this invention provides a computer-readable memory medium that stores program instructions, the execution of which result in performing operations that comprise transmitting a first beacon from a first access node for reception by a first user terminal that is associated with the first access node and also by a second user terminal that is associated with a second access node; where the first beacon comprises information descriptive of any neighbor access nodes detected by the first access node; and
receiving feedback at the first access node from the first user terminal that is associated with the first access node, the feedback comprising information obtained by the first user terminal from a second beacon received from the second access node, where the second beacon comprises information descriptive of any neighbor access nodes detected by the second access node, the method further comprising
the first access node determining if radio resources currently available to the first access node are sufficient for handling a current communication load and, if the first access node determines that is has insufficient radio resources, reserving additional available radio resources,
where the first access node becomes aware of the additional available resources from the received feedback, and reserves at least some of the additional available radio resources by including them in the first beacon as part of an identification of radio resources that are in use by the first access node.

Another aspect of the exemplary embodiments of this invention provides an apparatus that comprises a controller configured to operate with a wireless transmitter and a wireless receiver to transmit a first beacon for reception by a first user terminal that is associated with the apparatus and also by a second user terminal that is associated with a second apparatus, where the first beacon comprises information descriptive of any neighbor access nodes detected by the apparatus; and to receive feedback from the first user terminal that is associated with the apparatus, the feedback comprising information obtained by the first user terminal from a second beacon received from the second apparatus, where the second beacon comprises information descriptive of any neighbor access nodes detected by the second apparatus,
said controller being further configured to determine if radio resources currently available are sufficient for handling a current communication load and, upon determining that insufficient radio resources are present, to reserve additional available radio resources,
where the controller becomes aware of the additional available radio resources from the received feedback, and is further configured to reserve at least some of the additional available radio resources by including them in the first beacon as part of an identification of radio resources that are in use by the first access node.

Yet another aspect of the exemplary embodiments of this invention provides a method that comprises receiving at a user terminal a first beacon from a first access node that is associated with the user terminal and a second beacon from a second access node that is not associated with the user terminal, where the first and second beacons each comprise information descriptive of radio resources that are used by the access node that transmits the beacon and information descriptive of any neighbor access nodes detected by the access node that transmits the beacon. The method further includes transmitting feedback from the user terminal to the first access node, the feedback comprising at least the information descriptive of the radio resources that are used by the second access node and information descriptive of any neighbor access nodes detected by the second access node,
wherein said transmitted feedback allows the first access node to become aware of additional available resources and to reserve at least some of the additional available radio resources by including them in the first beacon as part of an identification of radio resources that are in use by the first access node.

Yet another aspect of the exemplary embodiments of this invention provides an apparatus that comprises a controller embodied in a user terminal and configured to operate with a wireless transmitter and a wireless receiver to receive a first beacon from a first access node that is associated with the user terminal and a second beacon from a second access node that is not associated with the user terminal. The first and second beacons each comprise information descriptive of radio resources that are used by the access node that transmits the beacon and information descriptive of any neighbor access nodes detected by the access node that transmits the beacon. The controller is further configured to transmit feedback to the first access node, the feedback comprising at least the information descriptive of the radio resources that are used by the second access node and information descriptive of any neighbor access nodes detected by the second access node,
wherein said transmitted feedback allows the first access node to become aware of additional available resources and to reserve at least some of the additional available radio resources by including them in the first beacon as part of an identification of radio resources that are in use by the first access node.

### BRIEF DESCRIPTION OF THE DRAWINGS

In the attached Drawing Figures:
Figure 1 reproduces Figure 4 of 3GPP TS 36.300, and shows the overall architecture of the EUTRAN system.
Figure 2 shows a simplified block diagram of various electronic devices that are suitable for use in practicing the exemplary embodiments of this invention.
Figure 3 is a logic flow diagram that illustrates the operation of a method, and a result of execution of computer program instructions embodied on a computer readable memory, in accordance with the exemplary embodiments of this invention.
Figure 4 is a logic flow diagram that illustrates the operation of a method, and a result of execution of computer program instructions embodied on a computer readable memory, further in accordance with the exemplary embodiments of this invention.

### DETAILED DESCRIPTION

Uncoordinated deployments would benefit significantly from the application of self-organizing flexible spectrum use, in practice providing some degree of automated network optimization for the system.

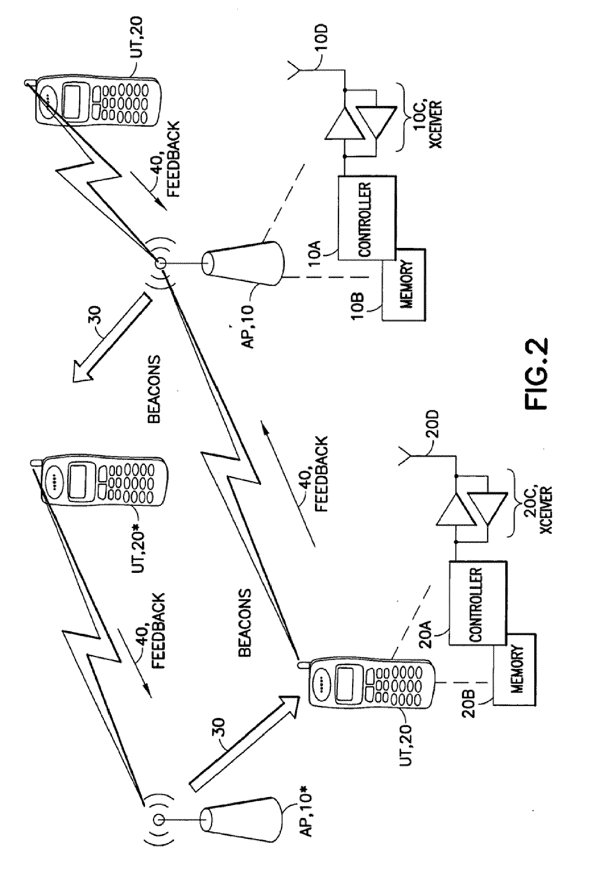

Reference can be made to Figure 2 which shows a plurality of APs 10 and UTs 20. The APs 10, each of which may also be referred to without a loss of generality as an access node (AN) or as a base station (BS), may be associated with different radio access networks, and may be considered as neighbors, enabling a single UT 20 to receive transmissions from its own AP 10 as well as from a neighboring AP 10. The UTs 20 may also be referred to, without a loss of generality, as mobile nodes (MNs), or as UEs, or as MSs. The AP 10 will generally include at least one controller 10A, such as at least one data processor, possibly a digital signal processor (DSP), at least one memory 10B and at least one radio frequency or other type of wireless transceiver 10C for connection with at least one antenna 10D. The memory 10B, which may be viewed as a computer-readable memory medium, stores in part computer program instructions that when executed enable the AP 10 to function in accordance with the exemplary embodiments of this invention. The UT 20 will also generally include at least one controller 20A, such as at least one data processor, possibly a DSP, at least one memory 20B and at least one radio frequency or other type of wireless transceiver 20C for connection with at least one antenna 20D. The memory 20B, which may also be viewed as a computer-readable memory medium, stores in part computer program instructions that when executed enable the UT 20 to function in accordance with the exemplary embodiments of this invention.

In Figure 2 the AP 10 is assumed to be associated with a first network, while the AP 10* (and UT 20*) is assumed to be associated with a second, different network. Each AP 10 may be assumed to establish a cell that defines the communication coverage area associated with the AP 10. The cells may be considered in some embodiments to be pico cells or femto cells, i.e., cells having smaller coverage areas than cells associated with conventional cellular communication systems (which may have dimensions measured in kilometers or tens of kilometers).

The exemplary embodiments of this invention utilize in-band broadcast control information that is used to locally monitor the spectrum usage situation. Broadcast messages, also referred to herein as beacons 30, are received by UTs 20 of the same network, as well as by UTs 20 belonging to different, neighboring networks. Each UT 20 further makes and processes measurements to create an understanding of the current spectrum usage situation in the current location of the UT 20. The UT 20 transmits feedback 40 to its own AP 10 in order to create awareness of the spectrum usage over the entire cell.

The transmission of the broadcast control information "in-band" implies that the broadcast control information, referred to herein for convenience as the beacon 30, is transmitted in a same frequency band that is used for transmitting communication data from the access point 10 to the user terminals 20. Note, however, that in other embodiments the beacon 30 could be transmitted out-of-band, i.e., in a frequency band not used for transmitting control data to the user terminals 20.

The exemplary embodiments of this invention provide a method of creating an understanding of the local spectrum usage situation, and thus provide local awareness for the AP 10. The mechanism for creating the local awareness is based on the broadcast control messages, i.e., the beacons 30, which are transmitted by APs 10 and received by UTs 20, and on the resulting feedback 40 from the UTs 20.

The beacons 30 may be used to identify neighbor cells, and which radio resources the neighbor cells are using. The beacons 30 may also be used for estimating how much interference the neighbor cells are causing (how close they are).

As employed herein a radio resource can include, as non-limiting examples, one or more of frequency channels, time slots and/or spreading codes, as well as the use of some resource, such as a frequency channel, for some certain duration, depending on the specifics of the underlying radio access technology.

In order to achieve these goals, a particular beacon 30 includes at least an indication of the resources in use. Note that a particular beacon 30 may also include, as optional information, one or more of the cell identity (which could be received from another channel); and a reference signal for supporting measurements made by the UTs 20 (which may instead be sent via some other mechanism by the system). The reference signal is preferably a known (to the UT 20) type of signal transmitted by the AP 10 that can be used by the UT 20 for at least one of synchronization, detection and/or channel estimation purposes.

Optionally, a beacon 30 may also include information descriptive of bandwidth demand estimates (i.e., an estimated future bandwidth required by the cell (AP 10) to serve the current traffic load of the cell). The estimate may be in the form of more/none/less, as one non-limiting example.

Optionally, a beacon 30 may also include information descriptive of an UL/DL switching point. The use of a flexible UL/DL TDD switching point allows adjusting the balance between UL and DL resources (i.e., what portion of the frames are used for the UL and for the DL). This factor may impact the amount of interference if neighboring cells do not have synchronized and identical frame structures.

Optionally, a beacon 30 may also include information that is related to fairness of resource use amongst the APs 10. The fairness of resource usage may be derived through various signaling mechanisms such as, but not limited to, trading negotiations, auctions and usage history.

Optionally, a beacon 30 may also include information descriptive of any neighbor APs detected by the AP 10. This information refers to the possibility to forward information (related to one or more of the foregoing beacon 30 contents) that is received from neighboring APs 20. This feature enables disseminating the system-related information even further than relying solely on the feedback 40 received from the UTs 20.

A UT 20 receives beacons 30 from one or more neighboring cells (neighboring APs 10) and gathers the information specific to the physical location of the UT 20. The UT 20 then transmits information to the AP 10 that the UT 20 is currently connected to. The beacons 30 received by a UT 20 connected to a particular AP 10, and the resulting information sent as feedback 40 to the AP 10, enable the AP 10 to achieve a collective understanding of the radio resource allocations made by itself for its associated cell, as well as radio resource allocations made by other neighboring APs that affect (or overlap) the cell of the AP 10. The UT 20 feedback 40 reports may contain compressed information of the local situation, such as the available spectrum resources.

The AP 10 operates in part to estimate if the resources currently used by it are sufficient for operation. If the AP 10 finds that it has excess resources, i.e., more resources than are currently necessary to support communications with the UT or UTs 20 within its cell, the AP 10 may release some or all of the excess resources and modify its own beacon 30 accordingly (i.e., to announce that resource(s) released are now free for use by other APs 10). If the current resources of the AP 10 are sufficient, and there are no excess resources available, then no action need be taken. If there is a need for additional resources at the AP 10 then the AP 10 takes action to obtain additional resources.

If the local awareness (obtained from the feedback 40 from UTs 20) indicates that free resources are available, the AP 10 may reserve the resources by modifying resource reservation information in its transmitted beacon 30 to include the new resources. Note that this resource reservation information could be the same as the "resources in use" information discussed above or, alternatively, it could be additional (optional) beacon 30 information that indicates a future intention of the AP 10 with respect to these resources, in addition to the current reservation. Otherwise, the AP 10 waits until resources become available due to a resource release mechanism, or a conflict resolution mechanism may be used to obtain additional resources.

Based on the foregoing it should be appreciated that an aspect of these exemplary embodiments of the invention is providing a local awareness scheme that enables gaining knowledge of the spectrum situation in a local area (a neighborhood), in order to enable self-organizing flexible spectrum use. The local awareness defines which resources are clear to transmit for an AP 10 and which resources are clear for receiving for the AP 10. In addition, the local awareness may contain information of neighboring APs 10 and their future intentions.

The beacons 30 are transmitted only by an AP 10, and the beacon information is received by a UT 20, which then processes and forwards the awareness information to the AP 10.

In general, a beacon frame may be periodically transmitted by an AP 10. Alternatively, the beacon 30 can be embedded into a frame or frames. Separate (possibly dedicated) interference-protected resources may be used for transmission of a beacon 30.

A particular beacon 30 may, in a non-limiting embodiment, contain the cell identification (e.g., using 8 bits) and the resources in use (e.g., using 64 bits). History information may also be present, such as a priority index (e.g., using 6 bits). In addition, a beacon 30 may contain information concerning neighbor APs 10, and possibly a reference signal for synchronization purposes. The AP 10 may also indicate its future intentions, such as by providing a traffic prediction and/or information regarding upcoming resource reservations.

One result of using the beacons 30 is that local awareness is gained in the UT 20. This local awareness may include, but is not limited to, neighbor AP 10 detection, occupied channels, interference levels on resources, future intent of neighbor APs 10 and their status and priorities, the TDD frame structure and the UL/DL switching point of neighbor APs 10 (if TDD is used as the radio access technology), as well as the signal strength and channel quality of the associated AP 10.

What may be thus understood at the UT 20 can include, but is not limited to, which resource(s) are available, which resource(s) would be best to use, which resource(s) cannot be used, resource swapping opportunities and/or whether one or more neighbor APs 10 intends to change (reduce or increase) their resource allocations.

Local awareness at the AP 10 can include based on AP 10 measurements, what (UL) resource(s) the AP 10 sees interference on, and can further include the feedback 40 from the UTs 20, own traffic load and where to transmit and schedule the UL.

There are a number of advantages and technical features made possible by the use of these exemplary embodiments.

For example, the use of FSU can greatly improve the spectral efficiency in those situations where deployments are uncoordinated, and traditional frequency planning is not possible or difficult to implement. FSU also enables the network to use higher peak data rates, since instantaneously the UT 20 can have access to a wider spectrum than in a conventional block division of spectrum. In order to make the use of FSU technically feasible, the exemplary embodiments of this invention provide awareness of the spectrum usage situation in a distributed, automated manner.

In general, the exemplary embodiments of this invention may be implemented at least in part by computer software executable by the controllers 10A, 20A, or by hardware, or by a combination of software and hardware (and firmware). The controllers 10A, 20A may be of any type suitable to the local technical environment, and may include one or more of general purpose computers, special purpose computers, microprocessors, digital signal processors (DSPs) and processors based on a multi-core processor architecture, as non-limiting examples. The computer readable memories 10B and 20B may be of any type suitable to the local technical environment and may be implemented using any suitable data storage technology, such as semiconductor based memory devices, flash memory, magnetic memory devices and systems, optical memory devices and systems, fixed memory and removable memory.

In general, the various embodiments of the UT 20 can include, but are not limited to, cellular telephones, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

The exemplary embodiments may include various integrated circuits and, in a most compact case, may all be embodied physically within a single chip.

Based on the foregoing it should be apparent that the exemplary embodiments of this invention provide a method, apparatus and computer program(s) to enhance local awareness of spectrum usage and other factors of a wireless communication system.

Figure 3 is a logic flow diagram that illustrates the operation of a method, and a result of execution of computer program instructions, in accordance with the exemplary embodiments of this invention. In accordance with these exemplary embodiments a method performs, at Block 3A, a step of transmitting a beacon from a first access point for reception by a first user terminal that is associated with the first access point and also by a second user terminal that is associated with a second access point. The method further performs, at Block 3B, a step of receiving feedback from the first user terminal that is associated with the first access point, the feedback comprising information obtained by the first user terminal from a beacon received from the second access point.

Figure 4 is a logic flow diagram that illustrates the operation of a method, and a result of execution of computer program instructions, further in accordance with the exemplary embodiments of this invention. In accordance with these exemplary embodiments a method performs, at Block 4A, a step of receiving at a user terminal a first beacon from a first access point that is associated with the user terminal and a second beacon from a second access point that is not associated with the user terminal, where the first and second beacons each comprise information descriptive of radio resources that are used by the access point that transmits the beacon. The method further includes, at Block 4B, a step of transmitting feedback from the user terminal to the first access point, the feedback comprising at least the information descriptive of the radio resources that are used by the second access point.

The various blocks shown in Figures 3 and 4 may be viewed as method steps, and/or as operations that result from operation of computer program code, and/or as a plurality of coupled logic circuit elements constructed to carry out the associated function(s).

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the exemplary embodiments of this invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

It should thus be appreciated that at least some aspects of the exemplary embodiments of the inventions may be practiced in various components such as integrated circuit chips and modules, and that the exemplary embodiments of this invention may be realized in an apparatus that is embodied as an integrated circuit. The integrated circuit, or circuits, may comprise circuitry (as well as possibly firmware) for embodying at least one or more of a data processor or data processors, a digital signal processor or processors, baseband circuitry and radio frequency circuitry that are configurable so as to operate in accordance with the exemplary embodiments of this invention.

Various modifications and adaptations to the foregoing exemplary embodiments of this invention may become apparent to those skilled in the relevant arts in view of the foregoing description, when read in conjunction with the accompanying drawings. However, any and all modifications will still fall within the scope of the non-limiting and exemplary embodiments of this invention.

For example, while the exemplary embodiments have been described above at least partially in the context of the LTE-A system, it should be appreciated that the exemplary embodiments of this invention are not limited for use with only this one particular type of wireless communication system, and that they may be used to advantage in other wireless communication systems. Further, it should be appreciated that the use of this invention may be made in both TDD and FDD type systems.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of the various non-limiting and exemplary embodiments ofthis invention may be used to advantage without the corresponding use of other features. As such, the foregoing description should be considered as merely illustrative of the principles, teachings and exemplary embodiments of this invention, and not in limitation thereof.

## Claims

1. A method, comprising:
transmitting a first beacon (30) from a first access node (10) for reception by a first user terminal (20) that is associated with the first access node and also by a second user terminal that is associated with a second access node; where the first beacon comprises information descriptive of any neighbor access nodes detected by the first access node; and
receiving feedback (40) at the first access node from the first user terminal (20) that is associated with the first access node, the feedback comprising information obtained by the first user terminal from a second beacon (30) received from the second access node, where the second beacon comprises information descriptive of any neighbor access nodes detected by the second access node, the method further comprising
the first access node (10) determining if radio resources currently available to the first access node are sufficient for handling a current communication load and, if the first access node determines that is has insufficient radio resources, reserving additional available radio resources,
where the first access node (10) becomes aware of the additional available resources from the received feedback, and reserves at least some of the additional available radio resources by including them in the first beacon as part of an identification of radio resources that are in use by the first access node.

2. The method of claim 1, where each beacon (30) comprises an identification of radio resources that are used by the access node transmitting the beacon.

3. The method of claim 2, where each beacon (30) further comprises an identification of the access node that transmits the beacon.

4. The method as in either one of claims 2 and 3, where each beacon (30) further comprises a reference signal for supporting measurements made by the first user terminal.

5. The method as in any one of claims 2-4, where each beacon (30) further comprises information descriptive of a bandwidth demand estimate.

6. The method as in any one of claims 2-5, where each beacon (30) further comprises information descriptive of a time division duplex uplink / downlink switching point.

7. The method as in any one of claim 2-6, where each beacon (30) further comprises information that is related to resource use amongst a plurality of user terminals.

8. The method as in any one of the preceding claims, further comprising the first access node (10) determining if radio resources currently available to the first access node are sufficient for handling a current communication load and, if the first access node determines that is has excess radio resources, the method further includes releasing some or all of the excess resources and identifying in the first beacon the released radio resources.

9. The method as in any one of the preceding claims, where the first access node is associated with a first radio access network, where the second access node is associated with a second radio access network, and where at least one of the first radio access network and the second radio access network employs flexible spectrum usage.

10. The method as in any one of the preceding claims, where the beacon (30) is transmitted using in-band signaling.

11. A computer-readable memory medium that stores program instructions, the execution of which result in performing operations comprising:
transmitting a first beacon (30) from a first access node (10) for reception by a first user terminal that is associated with the first access node and also by a second user terminal that is associated with a second access node, where the first beacon comprises information descriptive of any neighbor access nodes detected by the first access node; and
receiving feedback (40) at the first access node from the first user terminal (20) that is associated with the first access node, the feedback comprising information obtained by the first user terminal from a second beacon received from the second access node, where the second beacon (30) comprises information descriptive of any neighbor access nodes detected by the second access node,
the first access node (10) determining if radio resources currently available to the first access node are sufficient for handling a current communication load and, if the first access node determines that is has insufficient radio resources, reserving additional available radio resources,
where the first access node (10) becomes aware of the additional available resources from the received feedback, and reserves at least some of the additional available radio resources by including them in the first beacon as part of an identification of radio resources that are in use by the first access node.

12. The computer-readable memory medium of claim 11, where each beacon (30) comprises an identification of radio resources that are used by the access node transmitting the beacon.

13. The computer-readable memory medium of claim 12, where each beacon (30) further comprises an identification of the access node that transmits the beacon.

14. The computer-readable memory medium as in either one of claims 12 or 13, where each beacon (30) further comprises a reference signal for supporting measurements made by the first user terminal.

15. The computer-readable memory medium as in any one of claims 12-14, where each beacon (30) further comprises information descriptive of a bandwidth demand estimate.

16. The computer-readable memory medium as in any one of claims 12-15, where each beacon (30) further comprises information descriptive of a time division duplex uplink / downlink switching point.

17. The computer-readable memory medium as in any one of claims 12-16, where each beacon (30) further comprises information that is related to resource use amongst a plurality of user terminals.

18. The computer-readable memory medium as in any one of claims 12-17, further comprising an operation of the first access node determining if radio resources currently available to the first access node are sufficient for handling a current communication load and, if the first access node determines that is has excess radio resources, the method further includes releasing some or all of the excess resources and identifying in the beacon the released radio resources.

19. The computer-readable memory medium as in any one of claims 12-18, where the first access node is associated with a first radio access network, where the second access node is associated with a second radio access network, and where at least one of the first radio access network and the second radio access network employs flexible spectrum usage.

20. The computer-readable memory medium as in any one of claims 12-19, where the beacon is transmitted using in-band signaling.

21. An apparatus (10), comprising a controller configured to operate with a wireless transmitter and a wireless receiver to transmit a first beacon (30) for reception by a first user terminal (10) that is associated with the apparatus and also by a second user terminal that is associated with a second apparatus, where the first beacon comprises information descriptive of any neighbor access nodes detected by the apparatus; and to receive feedback from the first user terminal that is associated with the apparatus, the feedback comprising information obtained by the first user terminal from a second beacon (30) received from the second apparatus, where the second beacon comprises information descriptive of any neighbor access nodes detected by the second apparatus, said controller being further configured to determine if radio resources currently available are sufficient for handling a current communication load and, upon determining that insufficient radio resources are present, to reserve additional available radio resources,
where the controller becomes aware of the additional available radio resources from the received feedback, and is further configured to reserve at least some of the additional available radio resources by including them in the first beacon as part of an identification of radio resources that are in use by the first access node.

22. The apparatus of claim 21, where each beacon comprises an identification of radio resources that are used by the access node transmitting the beacon.

23. The apparatus of claim 22, where each beacon (30) further comprises at least one of an identification of the apparatus that transmits the beacon, a reference signal for supporting measurements made by the first user terminal, information descriptive of a bandwidth demand estimate, information descriptive of a time division duplex uplink / downlink switching point, information that is related to resource use amongst a plurality of user terminals.

24. The apparatus as in any one of the preceding claims, said controller being further configured to determine if radio resources currently available are sufficient for handling a current communication load and, upon determining that excess radio resources are present, to release some or all of the excess resources and to identify in the beacon the released radio resources.

25. The apparatus as in any one of claims 21-24, where the apparatus is embodied in an access node associated with a first radio access network, where the second apparatus is embodied in an access node associated with a second radio access network, and where at least one of the first radio access network and the second radio access network employs flexible spectrum usage.

26. The apparatus as in any one of claims 21-25, where the beacon is transmitted using in-band signaling.

27. A method, comprising:
receiving at a user terminal (10) a first beacon (30) from a first access node (20) that is associated with the user terminal and a second beacon from a second access node that is not associated with the user terminal, the first and second beacons each comprising information descriptive of radio resources that are used by the access node that transmits the beacon and information descriptive of any neighbor access nodes detected by the access node that transmits the beacon; and
transmitting feedback (40) from the user terminal (20) to the first access node (10), the feedback comprising at least the information descriptive of the radio resources that are used by the second access node and information descriptive of any neighbor access nodes detected by the second access node,
wherein said transmitted feedback allows the first access node (10) to become aware of additional available resources and to reserve at least some of the additional available radio resources by including them in the first beacon as part of an identification of radio resources that are in use by the first access node.

28. The method of claim 27, performed at least in part by execution of computer program instructions by a controller that comprises part of the user terminal.

29. An apparatus, comprising a controller embodied in a user terminal (10) and configured to operate with a wireless transmitter and a wireless receiver to receive a first beacon (30) from a first access node that is associated with the user terminal and a second beacon (30) from a second access node that is not associated with the user terminal, the first and second beacons each comprising information descriptive of radio resources that are used by the access node that transmits the beacon and information descriptive of any neighbor access nodes detected by the access node that transmits the beacon, said controller being further configured to transmit feedback to the first access node, the feedback comprising at least the information descriptive of the radio resources that are used by the second access node and information descriptive of any neighbor access nodes detected by the second access node,
wherein said transmitted feedback allows the first access node (10) to become aware of additional available resources and to reserve at least some of the additional available radio resources by including them in the first beacon as part of an identification of radio resources that are in use by the first access node.

## Patentansprüche

1. Verfahren, das Folgendes umfasst:
Senden einer ersten Bake (30) von einem ersten Zugriffsknoten (10) für den Empfang durch ein erstes Anwendergerät (20), das dem ersten Zugriffsknoten zugeordnet ist, und ebenfalls durch ein zweites Anwendergerät, das einem zweiten Zugriffsknoten zugeordnet ist; wobei die erste Bake Informationen umfasst, die benachbarte Zugriffsknoten, die durch den ersten Zugriffsknoten detektiert worden sind, beschreiben; und
Empfangen einer Rückmeldung (40) von dem ersten Anwendergerät (20), das dem ersten Zugriffsknoten zugeordnet ist, bei dem ersten Zugriffsknoten, wobei die Rückmeldung Informationen umfasst, die durch das erste Anwendergerät von einer zweiten Bake (30) erhalten worden sind, die von dem zweiten Zugriffsknoten empfangen worden ist, wobei die zweite Bake Informationen umfasst, die benachbarte Zugriffsknoten, die durch den zweiten Zugriffsknoten detektiert worden sind, beschreiben, wobei das Verfahren ferner
durch den ersten Zugriffsknoten (10) das Bestimmen, ob Funkbetriebsmittel, die für den ersten Zugriffsknoten aktuell verfügbar sind, zum Verarbeiten einer aktuellen Kommunikationslast ausreichen, und das Reservieren von zusätzlichen verfügbaren Funkbetriebsmitteln, wenn der erste Zugriffsknoten bestimmt, dass er nicht ausreichende Funkbetriebsmittel besitzt, umfasst,
wobei der erste Zugriffsknoten (10) die zusätzlichen verfügbaren Betriebsmittel aus der empfangenen Rückmeldung feststellt und mindestens einige der zusätzlichen verfügbaren Funkbetriebsmittel durch Einschließen davon in die erste Bake als Teil einer Identifizierung von Funkbetriebsmitteln, die durch den ersten Zugriffsknoten im Gebrauch sind, reserviert.

2. Verfahren nach Anspruch 1, wobei jede Bake (30) eine Identifizierung von Funkbetriebsmitteln, die durch den Zugriffsknoten, der die Bake sendet, verwendet werden, umfasst.

3. Verfahren nach Anspruch 2, wobei jede Bake (30) ferner eine Identifizierung des Zugriffsknotens, der die Bake sendet, umfasst.

4. Verfahren nach Anspruch 2 oder 3, wobei jede Bake (30) ferner ein Referenzsignal zum Unterstützen von Messungen, die durch das erste Anwendergerät durchgeführt worden sind, umfasst.

5. Verfahren nach einem der Ansprüche 2-4, wobei jede Bake (30) ferner Informationen, die eine Schätzung der Bandbreitennachfrage beschreiben, umfasst.

6. Verfahren nach einem der Ansprüche 2-5, wobei jede Bake (30) ferner Informationen, die einen Zeitduplex-Aufwärtsstreckenschaltpunkt oder einen Zeitduplex-Abwärtsstreckenschaltpunkt beschreiben, umfasst.

7. Verfahren nach einem der Ansprüche 2-6, wobei jede Bake (30) ferner Informationen, die mit der Verwendung von Betriebsmitteln unter mehreren Anwendergeräten zusammenhängen, umfasst.

8. Verfahren nach einem der vorhergehenden Ansprüche, das ferner das Bestimmen durch den ersten Zugriffsknoten (10), ob Funkbetriebsmittel, die aktuell für den ersten Zugriffsknoten verfügbar sind, zum Verarbeiten einer aktuellen Kommunikationslast ausreichen, umfasst, und wobei wenn der erste Zugriffsknoten bestimmt, dass er überschüssige Funkbetriebsmittel besitzt, das Verfahren ferner das Freigeben einiger oder aller überschüssigen Betriebsmittel und das Identifizieren der freigegebenen Funkbetriebsmittel in der ersten Bake enthält.

9. Verfahren nach einem der vorhergehenden Ansprüche, wobei der erste Zugriffsknoten einem ersten Funkzugriffsnetz zugeordnet ist, wobei der zweite Zugriffsknoten einem zweiten Funkzugriffsnetz zugeordnet ist und wobei das erste Funkzugriffsnetz und/oder das zweite Funkzugriffsnetz flexible Frequenznutzung einsetzen.

10. Verfahren nach einem der vorhergehenden Ansprüche, wobei die Bake (30) unter Verwendung von Nutzkanal-Signalisierung gesendet wird.

11. Computerlesbares Speichermedium, das Programmanweisungen speichert, wobei deren Ausführung das Durchführen von Vorgängen zur Folge hat, die Folgendes umfassen:
Senden einer ersten Bake (30) von einem ersten Zugriffsknoten (10) für den Empfang durch ein erstes Anwendergerät, das dem ersten Zugriffsknoten zugeordnet ist, und ebenfalls durch ein zweites Anwendergerät, das einem zweiten Zugriffsknoten zugeordnet ist; wobei die erste Bake Informationen umfasst, die benachbarte Zugriffsknoten, die durch den ersten Zugriffsknoten detektiert worden sind, beschreiben; und
Empfangen einer Rückmeldung (40) von dem ersten Anwendergerät (20), das dem ersten Zugriffsknoten zugeordnet ist, bei dem ersten Zugriffsknoten, wobei die Rückmeldung Informationen umfasst, die durch das erste Anwendergerät von einer zweiten Bake erhalten worden sind, die von dem zweiten Zugriffsknoten empfangen worden ist, wobei die zweite Bake (30) Informationen umfasst, die benachbarte Zugriffsknoten, die durch den zweiten Zugriffsknoten detektiert worden sind, beschreiben,
durch den ersten Zugriffsknoten (10) das Bestimmen, ob Funkbetriebsmittel, die für den ersten Zugriffsknoten aktuell verfügbar sind, zum Verarbeiten einer aktuellen Kommunikationslast ausreichen, und das Reservieren von zusätzlichen verfügbaren Funkbetriebsmitteln, wenn der erste Zugriffsknoten bestimmt, dass er nicht ausreichende Funkbetriebsmittel besitzt,
wobei der erste Zugriffsknoten (10) die zusätzlichen verfügbaren Betriebsmittel aus der empfangenen Rückmeldung feststellt und mindestens einige der zusätzlichen verfügbaren Funkbetriebsmittel durch Einschließen davon in die erste Bake als Teil einer Identifizierung von Funkbetriebsmitteln, die durch den ersten Zugriffsknoten im Gebrauch sind, reserviert.

12. Computerlesbares Speichermedium nach Anspruch 11, wobei jede Bake (30) eine Identifizierung von Funkbetriebsmitteln, die durch den Zugriffsknoten, der die Bake sendet, verwendet werden, umfasst.

13. Computerlesbares Speichermedium nach Anspruch 12, wobei jede Bake (30) ferner eine Identifizierung des Zugriffsknotens, der die Bake sendet, umfasst.

14. Computerlesbares Speichermedium nach Anspruch 12 oder 13, wobei jede Bake (30) ferner ein Referenzsignal zum Unterstützen von Messungen, die durch das erste Anwendergerät durchgeführt worden sind, umfasst.

15. Computerlesbares Speichermedium nach einem der Ansprüche 12-14, wobei jede Bake (30) ferner Informationen, die eine Schätzung der Bandbreitennachfrage beschreiben, umfasst.

16. Computerlesbares Speichermedium nach einem der Ansprüche 12-15, wobei jede Bake (30) ferner Informationen, die einen Zeitduplex-Aufwärtsstreckenschaltpunkt oder einen Zeitduplex-Abwärtsstreckenschaltpunkt beschreiben, umfasst.

17. Computerlesbares Speichermedium nach einem der Ansprüche 12-16, wobei jede Bake (30) ferner Informationen, die mit der Verwendung von Betriebsmitteln unter mehreren Anwendergeräten zusammenhängen, umfasst.

18. Computerlesbares Speichermedium nach einem der Ansprüche 12-17, das ferner einen Vorgang des Bestimmens durch den ersten Zugriffsknoten, ob Funkbetriebsmittel, die aktuell für den ersten Zugriffsknoten verfügbar sind, zum Verarbeiten einer aktuellen Kommunikationslast ausreichen, umfasst, und wobei wenn der erste Zugriffsknoten bestimmt, dass er überschüssige Funkbetriebsmittel besitzt, das Verfahren ferner das Freigeben einiger oder aller überschüssigen Betriebsmittel und das Identifizieren der freigegebenen Funkbetriebsmittel in der Bake enthält.

19. Computerlesbares Speichermedium nach einem der Ansprüche 12-18, wobei der erste Zugriffsknoten einem ersten Funkzugriffsnetz zugeordnet ist, wobei der zweite Zugriffsknoten einem zweiten Funkzugriffsnetz zugeordnet ist und wobei das erste Funkzugriffsnetz und/oder das zweite Funkzugriffsnetz flexible Frequenznutzung einsetzen.

20. Computerlesbares Speichermedium nach einem der Ansprüche 12-19, wobei die Bake unter Verwendung von Nutzkanal-Signalisierung gesendet wird.

21. Vorrichtung (10), die eine Steuereinheit umfasst, die konfiguriert ist, mit einem drahtlosen Sender und einem drahtlosen Empfänger zu arbeiten, um eine erste Bake (30) für den Empfang durch ein erstes Anwendergerät (10), das der Vorrichtung zugeordnet ist, und ebenfalls durch ein zweites Anwendergerät, das einer zweiten Vorrichtung zugeordnet ist, zu senden, wobei die erste Bake Informationen umfasst, die benachbarte Zugriffsknoten, die durch die Vorrichtung detektiert worden sind, beschreiben; und um eine Rückmeldung von dem ersten Anwendergerät, das der Vorrichtung zugeordnet ist, zu empfangen, wobei die Rückmeldung Informationen umfasst, die durch das erste Anwendergerät von einer zweiten Bake (30) erhalten worden sind, die von der zweiten Vorrichtung empfangen worden ist, wobei die zweite Bake Informationen umfasst, die benachbarte Zugriffsknoten, die durch die zweite Vorrichtung detektiert worden sind, beschreiben, wobei die Steuereinheit ferner konfiguriert ist, zu bestimmen, ob Funkbetriebsmittel, die aktuell verfügbar sind, zum Verarbeiten einer aktuellen Kommunikationslast ausreichen und dann zusätzliche verfügbare Funkbetriebsmittel zu reservieren, wenn bestimmt worden ist, dass nicht ausreichende Funkbetriebsmittel vorhanden sind,
wobei die Steuereinheit die zusätzlichen verfügbaren Betriebsmittel aus der empfangenen Rückmeldung feststellt und ferner konfiguriert ist, mindestens einige der zusätzlichen verfügbaren Funkbetriebsmittel durch Einschließen davon in die erste Bake als Teil einer Identifizierung von Funkbetriebsmitteln, die durch den ersten Zugriffsknoten im Gebrauch sind, zu reservieren.

22. Vorrichtung nach Anspruch 21, wobei jede Bake eine Identifizierung von Funkbetriebsmitteln, die durch den Zugriffsknoten, der die Bake sendet, verwendet werden, umfasst.

23. Vorrichtung nach Anspruch 22, wobei jede Bake (30) ferner eine Identifizierung der Vorrichtung, die die Bake sendet und/oder ein Referenzsignal zum Unterstützen von Messungen, die durch das erste Anwendergerät durchgeführt worden sind und/oder Informationen, die eine Schätzung der Bandbreitennachfrage beschreiben und/oder Informationen, die einen Zeitduplex-Aufwärtsstreckenschaltpunkt oder einen Zeitduplex-Abwärtsstreckenschaltpunkt beschreiben und/oder Informationen, die mit der Verwendung von Betriebsmitteln unter mehreren Anwendergeräten zusammenhängen, umfasst.

24. Vorrichtung nach einem der vorhergehenden Ansprüche, wobei die Steuereinheit ferner konfiguriert ist, zu bestimmen, ob Funkbetriebsmittel, die aktuell verfügbar sind, zum Verarbeiten einer aktuellen Kommunikationslast ausreichen, und dann, wenn bestimmt worden ist, dass überschüssige Funkbetriebsmittel vorhanden sind, einige oder alle überschüssigen Betriebsmittel freizugeben und die freigegebenen Funkbetriebsmittel in der Bake zu identifizieren.

25. Vorrichtung nach einem der Ansprüche 21-24, wobei die Vorrichtung in einem Zugriffsknoten enthalten ist, der einem ersten Funkzugriffsnetz zugeordnet ist, wobei die zweite Vorrichtung in einem Zugriffsknoten enthalten ist, der einem zweiten Funkzugriffsnetz zugeordnet ist, und wobei das erste Funkzugriffsnetz und/oder das zweite Funkzugriffsnetz flexible Frequenznutzung einsetzen.

26. Vorrichtung nach einem der Ansprüche 21-25, wobei die Bake unter Verwendung von Nutzkanal-Signalisierung gesendet wird.

27. Verfahren, das Folgendes umfasst:
Empfangen einer ersten Bake (30) bei einem Anwendergerät (10) von einem ersten Zugriffsknoten (20), der dem Anwendergerät zugeordnet ist, und einer zweiten Bake von einem zweiten Zugriffsknoten, der dem Anwendergerät nicht zugeordnet ist, wobei die erste und die zweite Bake jeweils Informationen, die Funkbetriebsmittel beschreiben, die durch den Zugriffsknoten verwendet werden, der die Bake sendet, und Informationen, die benachbarte Zugriffsknoten beschreiben, die durch den Zugriffsknoten detektiert worden sind, der die Bake sendet, umfassen; und
Senden einer Rückmeldung (40) von dem Anwendergerät (20) an den ersten Zugriffsknoten (10), wobei die Rückmeldung mindestens die Informationen, die die Funkbetriebsmittel, die durch den zweiten Zugriffsknoten verwendet werden, beschreiben, und Informationen, die benachbarte Zugriffsknoten, die durch den zweiten Zugriffsknoten detektiert worden sind, beschreiben, umfasst,
wobei die gesendete Rückmeldung es dem ersten Zugriffsknoten (10) ermöglicht, zusätzliche verfügbare Betriebsmittel festzustellen und mindestens einige der zusätzlichen verfügbaren Funkbetriebsmittel durch Einschließen davon in die erste Bake als Teil einer Identifizierung von Funkbetriebsmitteln, die durch den ersten Zugriffsknoten im Gebrauch sind, zu reservieren.

28. Verfahren nach Anspruch 27, das mindestens teilweise durch Ausführung der Computerprogrammanweisungen durch eine Steuereinheit, die einen Teil des Anwendergeräts umfasst, durchgeführt wird.

29. Vorrichtung, die eine Steuereinheit umfasst, die in einem Anwendergerät (10) enthalten ist und konfiguriert ist, mit einem drahtlosen Sender und einem drahtlosen Empfänger zu arbeiten, um eine erste Bake (30) von einem ersten Zugriffsknoten, der dem Anwendergerät zugeordnet ist, und eine zweite Bake (30) von einem zweiten Zugriffsknoten, der dem Anwendergerät nicht zugeordnet ist, zu empfangen, wobei die erste und die zweite Bake jeweils Informationen, die Funkbetriebsmittel beschreiben, die durch den Zugriffsknoten verwendet werden, der die Bake sendet, und Informationen, die benachbarte Zugriffsknoten beschreiben, die durch den Zugriffsknoten detektiert worden sind, der die Bake sendet, umfassen, wobei die Steuereinheit ferner konfiguriert ist, eine Rückmeldung an den ersten Zugriffsknoten zu senden, wobei die Rückmeldung mindestens die Informationen, die die Funkbetriebsmittel beschreiben, die durch den zweiten Zugriffsknoten verwendet werden, und Informationen, die benachbarte Zugriffsknoten beschreiben, die durch den zweiten Zugriffsknoten detektiert worden sind, umfasst,
wobei die gesendete Rückmeldung es dem ersten Zugriffsknoten (10) ermöglicht, zusätzliche Funkbetriebsmittel festzustellen und mindestens einige der zusätzlichen verfügbaren Funkbetriebsmittel durch Einschließen davon in die erste Bake als Teil einer Identifizierung von Funkbetriebsmitteln, die durch den ersten Zugriffsknoten im Gebrauch sind, zu reservieren.

## Revendications

1. Procédé, comprenant les étapes suivantes :
transmettre une première balise (30) à partir d'un premier noeud d'accès (10) pour une réception par un premier terminal utilisateur (20) qui est associé au premier noeud d'accès et également par un deuxième terminal utilisateur qui est associé à un deuxième noeud d'accès ; la première balise comportant des informations décrivant tous les noeuds d'accès voisins détectés par le premier noeud d'accès ; et
recevoir des informations de rétroaction (40) au niveau du premier noeud d'accès à partir du premier terminal utilisateur (20) qui est associé au premier noeud d'accès, les informations de rétroaction comprenant des informations obtenues par le premier terminal utilisateur à partir d'une deuxième balise (30) reçue à partir du deuxième noeud d'accès, la deuxième balise contenant des informations décrivant tous les noeuds d'accès voisins détectés par le deuxième noeud d'accès, le procédé comprenant en outre :
déterminer, par le premier noeud d'accès (10), si des ressources radio couramment disponibles pour le premier noeud d'accès sont suffisantes pour gérer une charge de communication courante et, si le premier noeud d'accès détermine qu'il a des ressources radio insuffisantes, réserver des ressources radio disponibles additionnelles, le premier noeud d'accès (10) prenant connaissance des ressources disponibles additionnelles à partir des informations de rétroaction reçues, et réservant au moins certaines des ressources radio disponibles additionnelles en les incluant dans la première balise comme faisant partie d'une identification de ressources radio qui sont utilisées par le premier noeud d'accès.

2. Procédé selon la revendication 1, dans lequel chaque balise (30) comprend une identification des ressources radio qui sont utilisées par le noeud d'accès transmettant la balise.

3. Procédé selon la revendication 2, dans lequel chaque balise (30) comprend en outre une identification du noeud d'accès qui transmet la balise.

4. Procédé selon l'une quelconque des revendications 2 et 3, dans lequel chaque balise (30) comprend en outre un signal de référence permettant de prendre en charge des mesures effectuées par le premier terminal utilisateur.

5. Procédé selon l'une quelconque des revendications 2-4, dans lequel chaque balise (30) comprend en outre des informations décrivant une estimation de demande de bande passante.

6. Procédé selon l'une quelconque des revendications 2-5, dans lequel chaque balise (30) comprend en outre des informations décrivant un point de commutation de liaison montante / liaison descendante de répartition dans le temps.

7. Procédé selon l'une quelconque des revendications 2-6, dans lequel chaque balise (30) comprend en outre des informations qui concernent une utilisation de ressources parmi une pluralité de terminaux utilisateur.

8. Procédé selon l'une quelconque des revendications précédentes, comprenant en outre : déterminer, par le premier noeud d'accès (10), si des ressources radio couramment disponibles pour le premier noeud d'accès sont suffisantes pour gérer une charge de communication courante et, si le premier noeud d'accès détermine qu'il a des ressources radio excédentaires, le procédé consiste en outre à libérer une partie ou la totalité des ressources excédentaires et à identifier dans la première balise les ressources radio libérées.

9. Procédé selon l'une quelconque des revendications précédentes, dans lequel le premier noeud d'accès est associé à un premier réseau d'accès radio, le deuxième noeud d'accès étant associé à un deuxième réseau d'accès radio, et au moins un réseau parmi le premier réseau d'accès radio et le deuxième réseau d'accès radio employant une utilisation de spectre flexible.

10. Procédé selon l'une quelconque des revendications précédentes, dans lequel la balise (30) est transmise en utilisant une signalisation dans la bande.

11. Support de mémoire lisible par ordinateur qui stocke des instructions de programme, dont l'exécution a pour résultat la mise en oeuvre des opérations comprenant :
transmettre une première balise (30) à partir d'un premier noeud d'accès (10) pour une réception par un premier terminal utilisateur qui est associé au premier noeud d'accès et également par un deuxième terminal utilisateur qui est associé à un deuxième noeud d'accès, la première balise comportant des informations décrivant tous les noeuds d'accès voisins détectés par le premier noeud d'accès ; et
recevoir des informations de rétroaction (40) au niveau du premier noeud d'accès à partir du premier terminal utilisateur (20) qui est associé au premier noeud d'accès, les informations de rétroaction comprenant des informations obtenues par le premier terminal utilisateur à partir d'une deuxième balise reçue à partir du deuxième noeud d'accès, la deuxième balise (30) contenant des informations décrivant tous les noeuds d'accès voisins détectés par le deuxième noeud d'accès,
déterminer, par le premier noeud d'accès (10), si des ressources radio couramment disponibles pour le premier noeud d'accès sont suffisantes pour gérer une charge de communication courante et, si le premier noeud d'accès détermine qu'il a des ressources radio insuffisantes, réserver des ressources radio disponibles additionnelles, le premier noeud d'accès (10) prenant connaissance des ressources disponibles additionnelles à partir des informations de rétroaction reçues, et réservant au moins certaines des ressources radio disponibles additionnelles en les incluant dans la première balise comme faisant partie d'une identification de ressources radio qui sont utilisées par le premier noeud d'accès.

12. Support de mémoire lisible par ordinateur selon la revendication 11, dans lequel chaque balise (30) comprend une identification de ressources radio qui sont utilisées par le noeud d'accès transmettant la balise.

13. Support de mémoire lisible par ordinateur selon la revendication 12, dans lequel chaque balise (30) comprend en outre une identification du noeud d'accès qui transmet la balise.

14. Support de mémoire lisible par ordinateur selon l'une quelconque des revendications 12 ou 13, dans lequel chaque balise (30) comprend en outre un signal de référence permettant de prendre en charge des mesures effectuées par le premier terminal utilisateur.

15. Support de mémoire lisible par ordinateur selon l'une quelconque des revendications 12-14, dans lequel chaque balise (30) comprend en outre des informations décrivant une estimation de demande de bande passante.

16. Support de mémoire lisible par ordinateur selon l'une quelconque des revendications 12-15, dans lequel chaque balise (30) comprend en outre des informations décrivant un point de commutation de liaison montante / liaison descendante de duplexage par répartition dans le temps.

17. Support de mémoire lisible par ordinateur selon l'une quelconque des revendications 12-16, dans lequel chaque balise (30) comprend en outre des informations qui concernent une utilisation de ressources parmi une pluralité de terminaux utilisateur.

18. Support de mémoire lisible par ordinateur selon l'une quelconque des revendications 12-17, comprenant en outre une opération du premier noeud d'accès déterminant si des ressources radio couramment disponibles pour le premier noeud d'accès sont suffisantes pour gérer une charge de communication courante et, si le premier noeud d'accès détermine qu'il a des ressources radio excédentaires, le procédé consiste en outre à libérer une partie ou la totalité des ressources excédentaires et à identifier dans la balise les ressources radio libérées.

19. Support de mémoire lisible par ordinateur selon l'une quelconque des revendications 12-18, dans lequel le premier noeud d'accès est associé à un premier réseau d'accès radio, le deuxième noeud d'accès étant associé à un deuxième réseau d'accès radio, et au moins un réseau parmi le premier réseau d'accès radio et le deuxième réseau d'accès radio employant une utilisation de spectre flexible.

20. Support de mémoire lisible par ordinateur selon l'une quelconque des revendications 12-19, dans lequel la balise est transmise en utilisant une signalisation dans la bande.

21. Appareil (10), comprenant un contrôleur configuré pour fonctionner avec un émetteur sans fil et un récepteur sans fil afin de transmettre une première balise (30) pour une réception par un premier terminal utilisateur (10) qui est associé à l'appareil et également par un deuxième terminal utilisateur qui est associé à un deuxième appareil, la première balise comportant des informations décrivant tous les noeuds d'accès voisins détectés par l'appareil, les informations de rétroaction comprenant des informations obtenues par le premier terminal utilisateur à partir d'une deuxième balise (30) reçue à partir du deuxième appareil, la deuxième balise contenant des informations décrivant tous les noeuds d'accès voisins détectés par le deuxième appareil, ledit contrôleur étant en outre configuré pour déterminer si des ressources radio couramment disponibles sont suffisantes pour gérer une charge de communication courante et, lors de la détermination que des ressources radio insuffisantes sont présentes, pour réserver des ressources radio disponibles additionnelles, le contrôleur prenant connaissance des ressources radio disponibles additionnelles à partir des informations de rétroaction reçues, et étant en outre configuré pour réserver au moins certaines des ressources radio disponibles additionnelles en les incluant dans la première balise comme faisant partie d'une identification de ressources radio qui sont utilisées par le premier noeud d'accès.

22. Appareil selon la revendication 21, dans lequel chaque balise comprend une identification de ressources radio qui sont utilisées par le noeud d'accès transmettant la balise.

23. Appareil selon la revendication 22, dans lequel chaque balise (30) comprend en outre au moins un élément parmi une identification de l'appareil qui transmet la balise, un signal de référence permettant de prendre en charge des mesures effectuées par le premier terminal utilisateur, des informations décrivant une estimation de demande de bande passante, des informations décrivant un point de commutation de liaison montante / liaison descendante de duplexage par répartition dans le temps, des informations qui concernent une utilisation de ressources parmi une pluralité de terminaux utilisateur.

24. Appareil selon l'une quelconque des revendications précédentes, ledit contrôleur étant en outre configuré pour déterminer si des ressources radio couramment disponibles sont suffisantes pour gérer une charge de communication courante et, lors de la détermination que des ressources radio excédentaires sont présentes, pour libérer une partie ou la totalité des ressources excédentaires et identifier dans la balise les ressources radio libérées.

25. Appareil selon l'une quelconque des revendications 21-24, dans lequel l'appareil est incorporé dans un noeud d'accès associé à un premier réseau d'accès radio, le deuxième appareil étant incorporé dans un noeud d'accès associé à un deuxième réseau d'accès radio, et au moins un réseau parmi le premier réseau d'accès radio et le deuxième réseau d'accès radio employant une utilisation de spectre flexible.

26. Appareil selon l'une quelconque des revendications 21-25, dans lequel la balise est transmise en utilisant une signalisation dans la bande.

27. Procédé, comprenant les étapes suivantes :
recevoir au niveau d'un terminal utilisateur (10) une première balise (30) à partir d'un premier noeud d'accès (20) qui est associé au terminal utilisateur et une deuxième balise à partir d'un deuxième noeud d'accès qui n'est pas associé au terminal utilisateur, les première et deuxième balises comportant chacune des informations décrivant des ressources radio qui sont utilisées par le noeud d'accès qui transmet la balise et des informations décrivant tous les noeuds d'accès voisins détectés par le noeud d'accès qui transmet la balise ; et
transmettre des informations de rétroaction (40) à partir du terminal utilisateur (20) au premier noeud d'accès (10), les informations de rétroaction comprenant au moins les informations décrivant les ressources radio qui sont utilisées par le deuxième noeud d'accès et des informations décrivant tous les noeuds d'accès voisins détectés par le deuxième noeud d'accès,
lesdites informations de rétroaction transmises permettant au premier noeud d'accès (10) de prendre connaissance des ressources disponibles additionnelles et de réserver au moins certaines des ressources radio disponibles additionnelles en les incluant dans la première balise comme faisant partie d'une identification de ressources radio qui sont utilisées par le premier noeud d'accès.

28. Procédé selon la revendication 27, exécuté au moins en partie par l'exécution d'instructions d'un programme informatique par un contrôleur qui comprend une partie du terminal utilisateur.

29. Appareil, comprenant un contrôleur incorporé dans un terminal utilisateur (10) et configuré pour fonctionner avec un émetteur sans fil et un récepteur sans fil pour recevoir une première balise (30) à partir d'un premier noeud d'accès qui est associé au terminal utilisateur et une deuxième balise (30) à partir d'un deuxième noeud d'accès qui n'est pas associé au terminal utilisateur, les première et deuxième balises comportant chacune des informations décrivant des ressources radio qui sont utilisées par le noeud d'accès qui transmet la balise et des informations décrivant tous les noeuds d'accès voisins détectés par le noeud d'accès qui transmet la balise, ledit contrôleur étant en outre configuré pour transmettre des informations de rétroaction au premier noeud d'accès, les informations de rétroaction comprenant au moins les informations décrivant les ressources radio qui sont utilisées par le deuxième noeud d'accès et des informations décrivant tous les noeuds d'accès voisins détectés par le deuxième noeud d'accès,
lesdites informations de rétroaction transmises permettant au premier noeud d'accès (10) de prendre connaissance des ressources disponibles additionnelles et de réserver au moins certaines des ressources radio disponibles additionnelles en les incluant dans la première balise comme faisant partie d'une identification de ressources radio qui sont utilisées par le premier noeud d'accès.
